# EUROPEAN PATENT APPLICATION

(11) **EP 3 511 363 A1**
(43) Date of publication of application: **17.07.2019**
(21) Application number: 17848362.4
(22) Date of filing: 25.05.2017
(51) Int. Cl.: C08J 3/20, C08F 290/14

(54) **CURABLE RESIN MIXTURE AND METHOD FOR PRODUCING CURABLE RESIN COMPOSITION**

(30) Priority: 09.09.2016 JP 2016177032
(71) Applicant: Showa Denko K.K., Tokyo 105-8518 (JP)
(72) Inventor: HASEGAWA, Aoi, Tokyo 105-8518 (JP); YAMASHITA, Chika, Tokyo 105-8518 (JP); ISHIBASHI, Yoshitaka, Tokyo 105-8518 (JP); TAJIMA, Tomonori, Tokyo 105-8518 (JP); OTAKE, Hiromi, Tokyo 105-8518 (JP)
(74) Representative: Strehl Schübel-Hopf & Partner
(86) International application number: PCT/JP2017/019602
(87) International publication number: WO 2018/047417

(57) **Abstract**

Provided are a curable resin mixture and a curable resin composition which contain a polyalkenylphenol resin and an aromatic polymaleimide compound having high crystallinity and a high melting point, and which exhibit excellent fluidity and reactivity. Also provided is a method for producing a curable resin mixture that contains: (A) a polyalkenylphenol resin which contains a polyalkenylphenol compound having at least 2 phenol skeletons in the molecule, a prescribed 2-alkenyl group being bonded to some or all of aromatic rings that form the phenol skeletons in the molecule; and (B) an aromatic polymaleimide compound. The method comprises: heating the aromatic polymaleimide compound (B) to the melting point or above and thereby melting the compound; and mixing the molten aromatic polymaleimide compound (B) and the polyalkenylphenol resin (A) within a temperature range at which the aromatic polymaleimide compound (B) does not recrystallize.

## Description

### FIELD

The present invention relates to methods for producing a curable resin mixture and a curable resin composition that include a polyalkenylphenol resin and an aromatic polymaleimide compound, and to a curable resin mixture and curable resin composition obtained by the methods.

### BACKGROUND

Maleimide resins are known as curable resins with high heat resistance. When a maleimide resin has been cured alone, the crosslink density increases due to its rigid skeleton, resulting in a hard and brittle cured product. Methods therefore commonly combine maleimide resins with curing agents, such as diamine or phenol, to produce cured products. It is known that when a polyalkenylphenol compound is used as the curing agent, the alkenyl groups of the polyalkenylphenol compound and the unsaturated groups of the maleimide resin undergo radical polymerization, forming a high degree of crosslinking, and thereby improving the brittleness of the cured product.

The aromatic polymaleimide compounds included in most maleimide resins take on a π-π stacked structure and therefore have high crystallinity and generally have high melting points. When an aromatic polymaleimide compound is combined with a polyalkenylphenol compound, it would be difficult for the crystalline structure of the aromatic polymaleimide compound to be disintegrated thereby achieving uniform dispersion, and therefore it has often been difficult to obtain thoroughly compatibilized mixtures with such compounds.

One possible method is to first melt the aromatic polymaleimide compound under high-temperature conditions to temporarily break down the crystalline structure. However, because aromatic polymaleimide compounds have high reactivity and tend to undergo self-polymerization, they often aggregate and are converted to insoluble high molecular weight compounds. It is therefore desirable to uniformly disperse highly crystalline aromatic polymaleimide compounds and polyalkenylphenol compounds while minimizing their polymerization.

PTL 1 describes dispersing and reacting an aromatic bismaleimide compound and an alkenylphenol compound in a reactor to produce a polymer.

### [CITATION LIST]

### [PATENT LITERATURE]

[PTL 1] Japanese Unexamined Patent Publication No. 2009-242471

### SUMMARY

### [TECHNICAL PROBLEM]

PTL 1, however, merely describes a method for producing a resin mixture of a monomer-type alkenylphenol compound and an aromatic bismaleimide, and nowhere deals with higher-molecular-weight polyalkenylphenol resins.

In light of this situation, it is an object of the invention to provide methods for producing a curable resin mixture and a curable resin composition including a highly crystalline and high-melting-point aromatic polymaleimide compound and a polyalkenylphenol resin, and having excellent flow properties and reactivity.

### [SOLUTION TO PROBLEM]

As a result of intensive studies, the present inventors have found that by melting an aromatic polymaleimide compound and then mixing the melted aromatic polymaleimide compound with a polyalkenylphenol resin, a resin mixture with minimal polymerization can be obtained. In addition, it was found that the resin mixture can be used to obtain a resin composition with excellent flowability and reaction efficiency. Specifically, the invention includes the following embodiments.
[1] A method for producing a curable resin mixture containing a polyalkenylphenol resin (A) that includes a polyalkenylphenol compound having at least two phenol skeletons in the molecule and a 2-alkenyl group represented by formula (1) bonded to all or a portion of the aromatic rings constituting the phenol skeletons in the molecule, and an aromatic polymaleimide compound (B),
   wherein the aromatic polymaleimide compound (B) is heated at or above its melting point to melt it, and the melted aromatic polymaleimide compound (B) and the polyalkenylphenol resin (A) are mixed in a temperature range in which the aromatic polymaleimide compound (B) does not recrystallize, 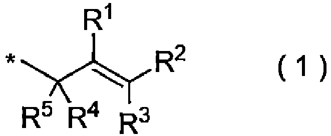 wherein in formula (1), R¹, R², R³, R⁴ and R⁵ each independently represent a hydrogen atom, an alkyl group of 1 to 5 carbon atoms, a cycloalkyl group of 5 to 10 carbon atoms or an aryl group of 6 to 12 carbon atoms, and the * symbol in formula (1) represents a portion bonding with a carbon atom constituting part of an aromatic ring.
[2] The method according to [1], further including mixing the melted aromatic polymaleimide compound (B) with the polyalkenylphenol resin (A) that is in a molten state.
[3] The method according to [1] or [2], further including adding the polyalkenylphenol resin (A) in a molten state to the melted aromatic polymaleimide compound (B), and mixing them.
[4] The method according to any one of [1] to [3], wherein the polyalkenylphenol resin (A) includes a polyalkenylphenol compound having structural units represented by formula (2)-1 and formula (2)-2, and when m is defined as the average number of structural units represented by formula (2)-1 per molecule and n is defined as the average number of structural units represented by formula (2)-2 per molecule, m is a real number of 1.1 to 35, m + n is a real number of 1.1 to 35, and n is a real number such that the value of the formula: m / (m + n) is 0.4 to 1, 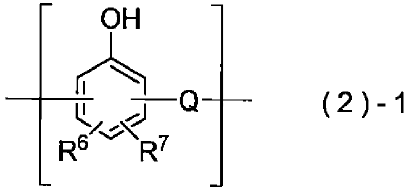 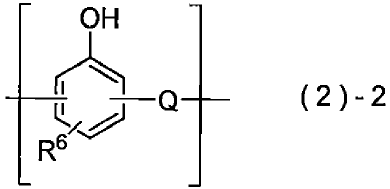 wherein in formula (2)-1 and formula (2)-2, R⁶ each independently represents a hydrogen atom, an alkyl group of 1 to 5 carbon atoms or an alkoxy group of 1 to 5 carbon atoms, and R⁷ each independently represents a 2-alkenyl group represented by formula (1); R⁶ and R⁷ may be the same or different at each phenol skeletal unit; each Q independently represents an alkylene group represented by the formula -CR⁸R⁹-, a cycloalkylene group of 5 to 10 carbon atoms, a divalent organic group having an aromatic ring, a divalent organic group having an alicyclic fused ring, or a divalent organic group that is a combination of the foregoing; and R⁸ and R⁹ each independently represent a hydrogen atom, an alkyl group of 1 to 5 carbon atoms, an alkenyl group of 2 to 6 carbon atoms, a cycloalkyl group of 5 to 10 carbon atoms or an aryl group of 6 to 12 carbon atoms.
[5] The method according to any one of [1] to [4], wherein the number average molecular weight of the polyalkenylphenol resin (A) is 300 to 5000.
[6] The method according to any one of [1] to [5], wherein the aromatic polymaleimide compound (B) is a bismaleimide compound.
[7] The method according to any one of [1] to [6], including mixing 40 to 150 parts by mass of the polyalkenylphenol resin (A) with respect to 100 parts by mass of the aromatic polymaleimide compound (B).
[8] The method according to any one of [1] to [7], including mixing the melted aromatic polymaleimide compound (B) and the polyalkenylphenol resin (A) so that the number average molecular weight change X, represented by the formula: X = (Mn' / Mn) - 1, where Mn is the number average molecular weight of the mixture obtained by mixing the polyalkenylphenol resin (A) and the aromatic polymaleimide compound (B) without heating, and Mn' is the number average molecular weight of the curable resin mixture, is in the range of 0 to 2.0.
[9] A curable resin mixture obtained by the method according to any one of [1] to [8].
[10] A method for producing a curable resin composition, including further mixing an additive (C) when the polyalkenylphenol resin (A) and the aromatic polymaleimide compound (B) are mixed in the method according to any one of [1] to [8].
[11] A method for producing a curable resin composition, including mixing an additive (C) with a curable resin mixture produced by the method according to any one of [1] to [8].
[12] The method according to [10] or [11], wherein the additive (C) includes a filler.
[13] The method according to [10] or [11], wherein the additive (C) includes a curing accelerator.
[14] A curable resin composition obtained by the method according to any one of [10] to [13].
[15] A cured product of the curable resin mixture according to [9] or the curable resin composition according to [14].

### [ADVANTAGEOUS EFFECTS OF INVENTION]

According to the invention, it is possible to obtain a curable resin mixture and a curable resin composition having excellent flowability and reactivity. Satisfactory flowability can be confirmed, for example, from the results of spiral flow of the curable resin mixture and curable resin composition, and excellent reactivity can be confirmed, for example, by the values of the Shore D hardness, flexural strength and Tg of the cured product of the curable resin mixture and curable resin composition.

### DESCRIPTION OF EMBODIMENTS

The invention will now be explained in greater detail. According to the invention, a curable resin mixture is produced by heating and melting an aromatic polymaleimide compound (B) at or above its melting point, and mixing the melted aromatic polymaleimide compound (B) and a polyalkenylphenol resin (A) in a temperature range at which aromatic polymaleimide compound (B) does not recrystallize. The melted aromatic polymaleimide compound (B) may also be mixed with polyalkenylphenol resin (A) that is in a molten state. The curable resin composition may be produced by mixing an additive (C) during or after production of the curable resin mixture. A cured product may be made by heating the curable resin mixture or curable resin composition, for example. Since polyalkenylphenol resin (A) includes a polymer, it can adopt various conformations in the curable resin mixture or curable resin composition when mixed with aromatic polymaleimide compound (B) depending on the mixing method, and thus it is difficult to identify the conformation. Even when the curable resin mixture or curable resin composition is cured, since the components react in a complex manner to form different final structures, it is difficult to identify those final structures in the cured product.

### (1) Method for producing curable resin mixture

### (A) Polyalkenylphenol resin

The polyalkenylphenol resin is a resin including a polyalkenylphenol compound having at least two phenol skeletons in the molecule, and a 2-alkenyl group represented by formula (1) bonded to all or a portion of the aromatic rings constituting the phenol skeletons in the molecule.

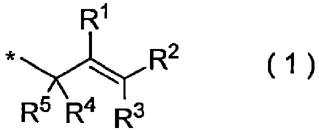

In formula (1), R¹, R², R³, R⁴ and R⁵ are each independently a hydrogen atom, an alkyl group of 1 to 5 carbon atoms, a cycloalkyl group of 5 to 10 carbon atoms or an aryl group of 6 to 12 carbon atoms. The * symbol in formula (1) represents a portion bonding with a carbon atom constituting part of an aromatic ring.

Specific examples of alkyl groups of 1 to 5 carbon atoms constituting groups R¹ R², R³, R⁴ and R⁵ of formula (1) include methyl, ethyl, n-propyl, isopropyl, n-butyl, sec-butyl, t-butyl and n-pentyl groups. Specific examples of cycloalkyl groups of 5 to 10 carbon atoms include cyclopentyl, cyclohexyl, methylcyclohexyl and cycloheptyl groups. Specific examples of aryl groups of 6 to 12 carbon atoms include phenyl, methylphenyl, ethylphenyl, biphenyl and naphthyl groups. The 2-alkenyl group represented by formula (1) is preferably an allyl group, or in other words, preferably R¹, R², R³, R⁴ and R⁵ are all hydrogen atoms.

The basic skeletons of the compound composing polyalkenylphenol resin (A) may be skeletons of a known phenol resin, such as a phenol-novolak resin, cresol-novolak resin, triphenylmethane-type phenol resin, phenolaralkyl resin, biphenylaralkylphenol resin or phenol-dicyclopentadiene copolymer resin. In the polyalkenylphenol resin, preferably 2-alkenyl groups are bonded to 40 to 100%, 60 to 100% or 80 to 100% of all of the aromatic rings constituting the phenol skeletons. Polyalkenylphenol resins including polyalkenylphenol compounds having structural units represented by the following formula (2)-1 and formula (2)-2 are preferably used.

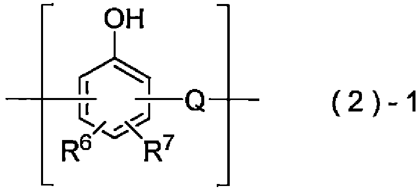

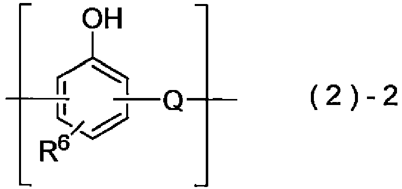

The structural units represented by formula (2)-1 and formula (2)-2 are phenol skeletal units that form the polyalkenylphenol compound in the polyalkenylphenol resin, and the bonding order of these phenol skeletal units is not particularly restricted. In formula (2), R⁶ each independently represents a hydrogen atom, an alkyl group of 1 to 5 carbon atoms or an alkoxy group of 1 to 5 carbon atoms, and R⁷ each independently represents a 2-alkenyl group represented by formula (1). R⁶ and R⁷ may be the same or different at each phenol skeletal unit. Each Q independently represents an alkylene group represented by the formula -CR⁸R⁹-, a cycloalkylene group of 5 to 10 carbon atoms, a divalent organic group having an aromatic ring, a divalent organic group having an alicyclic fused ring, or a divalent organic group that is a combination of the foregoing, and R⁸ and R⁹ each independently represent a hydrogen atom, an alkyl group of 1 to 5 carbon atoms, an alkenyl group of 2 to 6 carbon atoms, a cycloalkyl group of 5 to 10 carbon atoms or an aryl group of 6 to 12 carbon atoms. When m is defined as the average number of structural units represented by formula (2)-1 per molecule and n is defined as the average number of structural units represented by formula (2)-2 per molecule, then m is a real number of 1.1 to 35, m + n is a real number of 1.1 to 35, and n is a real number such that the value of the formula: m / (m + n) is 0.4 to 1.

Specific examples of alkyl groups of 1 to 5 carbon atoms constituting group R⁶ include methyl, ethyl, n-propyl, isopropyl, n-butyl, sec-butyl, t-butyl and n-pentyl groups. Specific examples of alkoxy groups of 1 to 5 carbon atoms include methoxy, ethoxy, n-propoxy, isopropoxy, n-butoxy, sec-butoxy, t-butoxy and n-pentoxy groups.

Specific examples of cycloalkylene groups of 5 to 10 carbon atoms constituting Q include cyclopentylene, cyclohexylene, methylcyclohexylene and cycloheptylene groups. Specific examples of divalent organic groups having aromatic rings include phenylene, tolylene, naphthylene, biphenylene, fluorenylene, anthracenylene, xylylene and 4,4-methylenediphenyl groups. The number of carbon atoms of the divalent organic group having an aromatic ring may be 6 to 20 or 6 to 14. A specific example of a divalent organic group having an alicyclic fused ring is a dicyclopentadienylene group. The number of carbon atoms of the divalent organic group having an alicyclic fused ring may be 7 to 20 or 7 to 10. For groups R⁸ and R⁹, specific examples of alkyl groups of 1 to 5 carbon atoms include methyl, ethyl, n-propyl, isopropyl, n-butyl, sec-butyl, t-butyl and n-pentyl groups, specific examples of alkenyl groups of 2 to 6 carbon atoms include vinyl, allyl, butenyl, pentenyl and hexenyl groups, specific examples of cycloalkyl groups of 5 to 10 carbon atoms include cyclopentyl, cyclohexyl, methylcyclohexyl and cycloheptyl groups, and specific examples of aryl groups of 6 to 12 carbon atoms include phenyl, methylphenyl, ethylphenyl, biphenyl and naphthyl groups. Q is preferably a dicyclopentadienylene, phenylene, methylphenylene or biphenylene group from the viewpoint of high mechanical strength of the resulting cured product when it is used in a curable resin mixture or curable resin composition. Q is preferably -CH₂- since the viscosity of the polyalkenylphenol resin is low, which is advantageous for mixing with the aromatic polymaleimide compound.

Letter m is a real number of 1.1 to 35, preferably a real number of 2 to 30 and more preferably a real number of 3 to 10. If m is 1.1 or greater, the thermal decomposition initiation temperature is suitable when the cured product of the curable resin mixture or curable resin composition is put in a high-temperature environment, and if it is no greater than 35, the viscosity of the curable resin mixture or curable resin composition is in a suitable range for processing during molding.

The value m + n is a real number of 1.1 to 35, preferably a real number of 2 to 30 and more preferably a real number of 3 to 10. If m + n is 1.1 or greater, the thermal decomposition initiation temperature is suitable when the cured product of the curable resin mixture or curable resin composition is put in a high-temperature environment, and if it is no greater than 35, the viscosity of the curable resin mixture or curable resin composition is in a suitable range for processing during molding.

Letter n is a real number such that the value of the formula: m / (m + n) is a real number of 0.4 to 1, preferably the value of the formula: m / (m + n) is a real number of 0.6 to 1, and more preferably the value of the formula: m / (m + n) is a real number of 0.8 to 1. When the value of the formula: m/(m + n) is 1, n is 0. That is, the polyalkenylphenol compound of this embodiment is composed solely of a structural unit represented by formula (2)-1. If n is a value satisfying the aforementioned condition, the curable resin mixture or curable resin composition may exhibit curability that is satisfactory depending on the purpose of use.

The number average molecular weight of the polyalkenylphenol resin is preferably 300 to 5000, more preferably 400 to 4000 and even more preferably 500 to 3000. If the number average molecular weight is 300 or greater, the thermal decomposition initiation temperature is suitable when the cured product of the curable resin mixture or curable resin composition has been set in a high-temperature environment, and if it is no greater than 5000, the viscosity of the curable resin mixture or curable resin composition is in a suitable range for processing during molding.

### (B) Aromatic polymaleimide compound

An aromatic polymaleimide compound is a compound having two or more maleimide groups, with the maleimide groups bonded to the same aromatic ring or to different ones. The aromatic ring includes a single ring, such as benzene, and a fused ring, such as naphthalene and anthracene. Specific examples of the aromatic polymaleimide compound include bismaleimides, such as bis(4-maleimidophenyl)methane (i.e., 4,4'-diphenylmethanebismaleimide), trismaleimides, such as tris(4-maleimidophenyl)methane, tetrakismaleimides, such as bis(3,4-dimaleimidophenyl)methane and polymaleimides, such as poly(4-maleimidostyrene). The aromatic polymaleimide compound is preferably a bismaleimide compound, since it may be satisfactorily mixed in the curable resin mixture and curable resin composition. Specific examples of bismaleimide compounds include 4,4'-diphenylmethanebismaleimide, bis(3-maleimidophenyl)methane, bis(3 -methyl-4-maleimidophenyl)methane, bis(3,5 -dimethyl-4-maleimidophenyl)methane, bis(3-ethyl-4-maleimidophenyl)methane, bis(3,5-diethyl-4-maleimidophenyl)methane, bis(3-propyl-4-maleimidophenyl)methane, bis(3,5-dipropyl-4-maleimidophenyl)methane, bis(3 -butyl-4-maleimidophenyl)methane, bis(3,5 -dibutyl-4-maleimidophenyl)methane, bis(3-ethyl-4-maleimido-5-methylphenyl)methane, 2,2-bis(4-maleimidophenyl)propane, 2,2-bis[4-(4-maleimidophenyloxy)phenyl]propane (i.e., bisphenol A-diphenyl ether bismaleimide), bis(4-maleimidophenyl)ether, bis(3-maleimidophenyl)ether, bis(4-maleimidophenyl)ketone, bis(3-maleimidophenyl)ketone, bis(4-maleimidophenyl)sulfone, bis(3-maleimidophenyl)sulfone, bis[4-(4-maleimidophenyloxy)phenyl]sulfone, bis(4-maleimidophenyl)sulfide, bis(3-maleimidophenyl)sulfide, bis(4-maleimidophenyl)sulfoxide, bis(3-maleimidophenyl)sulfoxide, 1,4-bis(4-maleimidophenyl)cyclohexane, 1,4-dimaleimidonaphthalene, 2,3-dimaleimidonaphthalene, 1,5-dimaleimidonaphthalene, 1,8-dimaleimidonaphthalene, 2,6-dimaleimidonaphthalene, 2,7-dimaleimidonaphthalene, 4,4'-dimaleimidobiphenyl, 3,3'-dimaleimidobiphenyl, 3,4'-dimaleimidobiphenyl, 2,5-dimaleimido-1,3-xylene, 2,7-dimaleimidofluorene, 9,9-bis(4-maleimidophenyl)fluorene, 9,9-bis(4-maleimido-3-methylphenyl)fluorene, 9,9-bis(3-ethyl-4-maleimidophenyl)fluorene, 3,7-dimaleimido-2-methoxyfluorene, 9,10-dimaleimidophenanthrene, 1,2-dimaleimidoanthraquinone, 1,5-dimaleimidoanthraquinone, 2,6-dimaleimidoanthraquinone, 1,2-dimaleimidobenzene, 1,3-dimaleimidobenzene, 1,4-dimaleimidobenzene, 1,4-bis(4-maleimidophenyl)benzene, 2-methyl-1,4-dimaleimidobenzene, 2,3-dimethyl-1,4-dimaleimidobenzene, 2,5-dimethyl-1,4-dimaleimidobenzene, 2,6-dimethyl-1,4-dimaleimidobenzene, 4-ethyl-1,3-dimaleimidobenzene, 5-ethyl-1,3-dimaleimidobenzene, 4,6-dimethyl-1,3-dimaleimidobenzene, 2,4,6-trimethyl-1,3-dimaleimidobenzene, 2,3,5,6-tetramethyl-1,4-dimaleimidobenzene and 4-methyl-1,3-dimaleimidobenzene. Examples of commercial products include any of the BMI Series (trade name of Daiwakasei Industry Co., Ltd.).

Polyalkenylphenol resin (A) content is preferably 30 to 200 parts by mass, more preferably 40 to 150 parts by mass and even more preferably 50 to 130 parts by mass, with respect to 100 parts by mass of aromatic polymaleimide compound (B). If the content is 30 parts by mass or greater, the mechanical properties, such as elastic modulus, of the cured product are in suitable ranges, and the cured product may have adequate strength. If the content is no greater than 200 parts by mass, on the other hand, the heat resistance and mechanical strength of the cured product may be satisfactory.

According to the invention, the aromatic polymaleimide compound is melted before being mixed with the polyalkenylphenol resin. The aromatic polymaleimide compound may be melted by heating at or above its melting point, but the heating temperature is in a range such that polymerization is not promoted. Specifically, if the melting point of the aromatic polymaleimide compound is represented as T°C, then the aromatic polymaleimide compound is melted preferably in a temperature range of from T°C to (T + 50)°C, more preferably in a temperature range of from T°C to (T + 30°C), and even more preferably in a temperature range of from T°C to (T + 20)°C. At or above T°C, the aromatic polymaleimide compound may sufficiently melt and a uniformly dispersed curable resin mixture may be obtained in the subsequent mixing step. At up to T + 50°C, gelation due to self-polymerization can be minimized.

According to the invention, the aromatic polymaleimide compound is heated at or above its melting point to melt it, and the polyalkenylphenol resin is mixed in a temperature range such that the aromatic polymaleimide compound does not recrystallize. A temperature range such that the aromatic polymaleimide compound does not recrystallize is a temperature range that is lower than the melting point of the aromatic polymaleimide compound, and such that particulates of the aromatic polymaleimide compound do not precipitate when lowering the temperature of the aromatic polymaleimide compound once it has become transparent by hot melting. This may more effectively minimize polymerization of the aromatic polymaleimide compound, and also allow adequate mixing of the aromatic polymaleimide compound and the polyalkenylphenol resin. For example, BMI-4000 (Daiwakasei Industry Co., Ltd.) has a melting point of 165°C, and therefore it may be mixed after lowering the temperature to 130°C or higher and lower than 165°C after melting. At 130°C or higher, it is possible to adequately avoid recrystallization and to carry out mixing in the form of a transparent liquid.

Depending on the mixing method used and the molecular weight of the polyalkenylphenol resin, mixing with the melted aromatic polymaleimide compound may be carried out with the polyalkenylphenol resin in a molten state. This may allow the polyalkenylphenol resin and the aromatic polymaleimide compound to be more uniformly dispersed and mixed. In this embodiment, the aromatic polymaleimide may be added to and mixed with the melted polyalkenylphenol resin, or the melted polyalkenylphenol resin may be added to and mixed with the aromatic polymaleimide. Preferably, the melted polyalkenylphenol resin is added to and mixed with the aromatic polymaleimide. The heating temperature for melting of the polyalkenylphenol resin is preferably at or above the melting point of the polyalkenylphenol resin and in a temperature range such that polymerization of the aromatic polymaleimide compound is not promoted. The polyalkenylphenol resin does not need to melt completely, and it may be mixed when only a portion thereof is in a molten or viscosity-reduced state. When the polyalkenylphenol resin is in liquid form, it may be mixed directly.

The method of mixing the polyalkenylphenol resin and the aromatic polymaleimide compound is not particularly restricted. The curable resin mixture may be prepared by loading the components into a reactor, or a mixer, such as a pot mill, triple roll mill, rotary mixer, twin screw mixer, Disper mixer, etc., in the prescribed mixing proportion, and then stirring or kneading the components. In a laboratory scale, a rotary mixer which allows easy adjustment of the stirring conditions is preferred, while a twin screw mixer is preferred from the viewpoint of industrial productivity. Each of these mixers may be used with appropriate adjustment of the stirring conditions.

The melted aromatic polymaleimide compound and the polyalkenylphenol resin are preferably mixed so that the number average molecular weight change X, represented by the formula: X = (Mn' / Mn) - 1, where Mn is the number average molecular weight of the mixture obtained by mixing the polyalkenylphenol resin and the aromatic polymaleimide compound without heating, and Mn' is the number average molecular weight of the curable resin mixture, is in the range of 0 to 2.0. X is more preferably 0 to 1.5, even more preferably 0 to 1.0 and yet more preferably 0 to 0.8. A value of X of 2.0 or smaller may result in a suitable amount of high-molecular-weight components in the curable resin mixture or curable resin composition, and the curable resin mixture or curable resin composition is able to easily flow during molding.

### (2) Method for producing curable resin composition

### Additives (C)

Various additives may be mixed with the curable resin mixture in ranges that do not interfere with its curing property, to prepare a curable resin composition. The additives may be further mixed in during mixing of the polyalkenylphenol resin and the aromatic polymaleimide compound, or they may be mixed afterward with the curable resin mixture produced by mixing the polyalkenylphenol resin and the aromatic polymaleimide compound. When additives are mixed in during mixing of the polyalkenylphenol resin and the aromatic polymaleimide compound, the addition method, time and amounts may be suitably selected so as to minimize recrystallization or gelation of the polyalkenylphenol resin or the aromatic polymaleimide compound.

Examples of additives include fillers (C-1) and curing accelerators (C-2).

### Fillers (C-1)

There are no particular restrictions on the types of fillers, which include organic fillers, such as silicone powder, and inorganic fillers, such as silica and boron nitride, and they may be suitably selected depending on the purpose of use.

For example, when the curable resin composition is used for semiconductor sealing, an inorganic filler with an insulating property is preferably added to lower the thermal expansion coefficient of the cured product. There are no particular restrictions on the inorganic filler, and any publicly known one may be used. Specifically, inorganic fillers may include particles of amorphous silica, crystalline silica, alumina, boron nitride, aluminum nitride or silicon nitride. From the viewpoint of viscosity reduction, spherical amorphous silica is preferred. The inorganic filler may be surface treated with a silane coupling agent, etc., or it may be one that has not been surface treated. The mean particle size of the inorganic filler is preferably 0.1 to 20 µm, and preferably the maximum particle size is no greater than 50 µm and especially no greater than 20 µm. If the mean particle size is within this range, the viscosity of the curable resin composition is suitable during use, and the injectability into narrow-pitch wiring sections or narrow gap sections is also suitable. The mean particle size referred to herein is the volume cumulative particle size D₅₀ measured with a laser diffraction-scattering particle size distribution analyzer. The content of the inorganic filler in the curable resin composition may be determined as appropriate for the purpose of use. For example, for semiconductor sealing purposes, the content of the inorganic filler in the curable resin composition is preferably 50 to 95 mass%, more preferably 55 to 90 mass% and even more preferably 65 to 90 mass%.

### Curing accelerators (C-2)

A curing accelerator may be used to accelerate curing. Examples of curing accelerators include radical initiators, such as photo radical initiators and thermal radical initiators. The curing accelerator is preferably a thermal radical initiator. Organic peroxides may be mentioned as more preferred thermal radical initiators. More preferred among organic peroxides are organic peroxides having a 10-hour half-life temperature of 100 to 170°C. Specifically, these may include dicumyl peroxide, 2,5-dimethyl-2,5-di(*tert*-butylperoxy)hexane, *tert*-butylcumyl peroxide, di-*tert*-butyl peroxide, 1,1,3,3-tetramethylbutyl hydroperoxide and cumene hydroperoxide. The preferred use amount of the curing accelerator is 0.1 to 5 parts by mass, more preferably 0.2 to 4 parts by mass and even more preferably 0.5 to 3 parts by mass, with respect to 100 parts by mass of the total of the polyalkenylphenol resin and the aromatic bismaleimide compound. If the amount of curing accelerator used is 0.1 part by mass or greater, the curing reaction may be sufficiently accelerated, and if it is no greater than 5 parts by mass, the storage stability of the curable resin composition may be satisfactory.

Other additives that may be used include coupling agents, antifoaming agents, coloring agents, fluorescent materials, modifying agents, leveling agents, light diffusion agents and flame retardants. A coupling agent may be added from the viewpoint of imparting adhesion and it is not particularly restricted in its structure. Examples of coupling agents include silane coupling agents, such as vinyltriethoxysilane, vinyltrimethoxysilane, 3-glycidoxypropyltrimethoxysilane, γ-methacryloxypropyltrimethoxysilane, γ-aminopropyltrimethoxysilane and N-phenyl-3-aminopropyltrimethoxysilane. A coupling agent may be used alone, or two or more coupling agents may be used in combination. The content of the coupling agent in the curable resin composition is preferably 0.1 to 5 mass%. If the content is 0.1 mass% or greater, the effect of adding the coupling agent may be sufficiently obtained, and if it is no greater than 5 mass%, the melt viscosity and the hygroscopicity and strength of the cured product may be satisfactory.

The method of preparing the curable resin composition is not particularly restricted, as with the method for producing the curable resin mixture. The curable resin mixture and additives may be loaded into a mixer, such as a pot mill, triple roll mill, rotary mixer, twin screw mixer, Disper mixer, single-screw or twin screw (codirectional or opposite-directional) extruder, kneader, etc., in the prescribed mixing proportion, to prepare a composition. When the curable resin composition is subjected to powderization, the method is not particularly restricted so long as the resin does not melt by the heat generated during operating steps, but for a small amount, it is convenient to use an agate mortar. When a commercially available pulverizer is employed, types that generate low heat during pulverizing are preferred in order to minimize melting of the mixture. The particle size of the powder may be up to about 1 mm.

The total content of the polyalkenylphenol resin and the aromatic bismaleimide compound in the curable resin composition may be, for example, 5 mass% or greater, 10 mass% or greater or 20 mass% or greater, and no greater than 99.9 mass%, no greater than 95 mass% or no greater than 90 mass%.

### (3) Method of producing cured product

The curable resin mixture and curable resin composition of the invention may be cured by heating. The thermosetting conditions are preferably 110 to 300°C, more preferably 120 to 280°C and even more preferably 130 to 250°C. At 110°C or higher, curing may sufficiently proceed within a suitable period of time, and at no higher than 300°C, degradation or volatilization of the components can be prevented, and equipment safety can be maintained. The heating time may depend on the curing temperature, but is preferably 0.5 to 48 hours from the viewpoint of productivity. The heating may be carried out over the course of several times. If an especially high degree of curing is desired, then instead of curing at an excessively high temperature, the temperature may be raised as curing progresses to a final curing temperature of, for example, no higher than 250°C and preferably no higher than 230°C.

### EXAMPLES

The present invention will now be explained in greater detail using examples and comparative examples, with the understanding that the invention is not limited to the examples.

The starting materials in the examples and comparative examples were as follows. Starting materials
- Polyalkenylphenol resin A: Resin obtained by allylating phenolic hydroxyl groups of phenol-novolak resin Shonol (registered trademark) BRG-558 (Showa Denko K.K.) at para positions (hydroxyl equivalents: 159, number average molecular weight: Mn 1600, weight average molecular weight: Mw 5400, melting point: 55°C). The production method is described in Example 3 of Japanese Unexamined Patent Publication No. 2016-28129.
- Polyalkenylphenol resin B: Resin obtained by allylating phenolic hydroxyl groups of phenol aralkyl resin HE-100C-12 (Air Water Inc.) at para positions (hydroxyl equivalents: 222, number average molecular weight: Mn 950, weight average molecular weight: Mw 1950, melting point: 20°C). Refer to the Examples of Japanese Unexamined Patent Publication No. 2016-28129 for the production method.
- Bismaleimide compound: BMI-4000 (bisphenol A-diphenyl ether bismaleimide, melting point: 165°C, Daiwakasei Industry Co., Ltd.) and BMI-1100H (4,4'-diphenylmethanebismaleimide, melting point: 160°C, Daiwakasei Industry Co., Ltd.).
- Polymerization initiator: Percumyl D (NOF Corp.)
- Silica filler: MSR2212 (spherical silica, mean particle size: 25.5 µm, Tatsumori, Ltd., treated with 0.5 mass% silane coupling agent KBM-403 (Shin-Etsu Chemical Co., Ltd.)).

The analysis methods and property evaluation methods used in the examples and comparative examples were as follows.

### Analysis methods

### • Molecular weight

This was measured by GPC. The measuring conditions were as follows.
Apparatus: Shodex (registered trademark) GPC-101
Column: Shodex (registered trademark) KF-802, KF-803, KF-805
Mobile phase: tetrahydrofuran
Flow velocity: 1.0 mL/min
Detector: Shodex (registered trademark) RI (registered trademark) -71
Temperature: 40°C

The number average molecular weight Mn and the weight average molecular weight Mw were calculated based on a calibration curve prepared using standard polystyrene, under the measuring conditions specified above.

### • Method of calculating number average molecular weight change X

The bismaleimide compounds and the polyalkenylphenol resins in the amounts specified in the Examples and Comparative Examples were weighed and dissolved in THF, and then the number average molecular weights (Mn) of the mixtures, and the number average molecular weights (Mn') of the curable resin mixtures after mixing by the procedures described in the Examples and Comparative Examples, were each measured by GPC and the number average molecular weight change X was calculated using the formula: X = (Mn' / Mn) - 1, as the increase ratio of Mn' with respect to Mn. The number average molecular weight was determined by integrating the entire area including the peaks of the polyalkenylphenol resin and the aromatic polymaleimide compound.

### • Flexural strength

Measurement was carried out using a TENSILON tester (model: MSAT0002RTF/RTG) by A&D Co., Ltd. The test strip shape was 750 mm length × 10 mm width × 3 mm thickness. A 3-point bending test was conducted 5 times at room temperature with a test speed of 2 mm/min, according to JIS K7171, and the average value was recorded as the flexural strength.

### • Glass transition temperature (Tg)

Measurement was carried out using a thermomechanical analyzer (TMA). A TMA/SS6100 thermomechanical analyzer by SII NanoTechnology Inc. was used for measurement of a 5 mm × 5 mm × 5 mm test strip under conditions with a temperature range of 30 to 300°C, a temperature-elevating rate of 5°C/min and a load of 20.0 mN, to determine the Tg.

### • Spiral flow

The spiral flow was measured according to Japan Electrical Insulating and Advanced Performance Materials Industrial Association Standards EIMS T 901. By using a test die with an engraved spiral groove and a transfer molding machine (Matsuda Seisakusho, Co. Ltd.), and heating the top plate and die to 180°C and molding at a pressure of 100 kg/cm², the spiral flow value after a period of 3 minutes was measured.

### (1) Production of curable resin mixture

### Example 1

BMI-4000 was added at 100 parts by mass into a reactor and heated and stirred at 170°C. When all of BMI-4000 had melted producing a transparent liquid, the temperature was lowered to 150°C. Polyalkenylphenol resin A that had been heated to 80°C and melted was then added at 100 parts by mass to the reactor, and heated stirring was carried out at 150°C for 10 minutes to mix the two resins. The curable resin mixture was then removed out. Since the number average molecular weight (Mn) before heating was 408 and the number average molecular weight (Mn') after heating was 450, X was 0.1 (= 450/408 - 1).

### Example 2

BMI-4000 was added at 100 parts by mass to a twin roll that had been heated to 170°C. When all of BMI-4000 had melted producing a transparent liquid that had wrapped around the roll, the temperature was lowered to 150°C. Polyalkenylphenol resin A was then added at 100 parts by mass, and kneading was carried out at 150°C for 10 minutes to mix the two resins. The curable resin mixture was then removed out.

### Example 3

BMI-1100H was added at 100 parts by mass into a reactor and heated and stirred at 160°C. When all of BMI-1100H had melted producing a transparent liquid, the temperature was lowered to 150°C. Polyalkenylphenol resin A that had been heated to 80°C and melted was then added at 100 parts by mass to the reactor, and heated stirring was carried out at 150°C for 10 minutes to mix the two resins. The curable resin mixture was then removed out.

### Example 4

BMI-4000 was added at 100 parts by mass into a reactor and heated and stirred at 170°C. When all of BMI-4000 had melted producing a transparent liquid, the temperature was lowered to 150°C. Polyalkenylphenol resin B that had been heated to 80°C and melted was then added at 100 parts by mass to the reactor, and heated stirring was carried out at 150°C for 10 minutes to mix the two resins. The curable resin mixture was then removed out.

### Example 5

BMI-4000 was added at 100 parts by mass into a reactor and heated and stirred at 170°C. When all of BMI-4000 had melted producing a transparent liquid, the temperature was lowered to 150°C. Polyalkenylphenol resin A that had been heated to 80°C and melted was then added at 200 parts by mass to the reactor, and heated stirring was carried out at 150°C for 10 minutes to mix the two resins. The curable resin mixture was then removed out.

### Comparative Example 1

Both 100 parts by mass of BMI-4000 and 100 parts by mass of polyalkenylphenol resin A were added into a reactor and heated and stirred at 180°C. After the two resins had each melted, heating and stirring was continued at 180°C for 30 minutes. The curable resin mixture was then removed out.

### Comparative Example 2

Both 100 parts by mass of BMI-4000 and 100 parts by mass of polyalkenylphenol resin A were added into a reactor and heated and stirred at 150°C for 10 minutes. The curable resin mixture was then removed out.

### Comparative Example 3

BMI-4000 was added at 100 parts by mass into a reactor and heated and stirred at 170°C. When all of BMI-4000 had melted producing a transparent liquid, the temperature was lowered to 100°C. A crystal-containing particulate substance precipitated in BMI-4000 during this time. Polyalkenylphenol resin A that had been heated to 80°C and melted was then added at 100 parts by mass to the reactor, and heated stirring was carried out at 100°C for 10 minutes to mix the two resins. The curable resin mixture was then removed out.

### Comparative Example 4

A mill mixer (Model WB-1 by Osaka Chemical Co., Ltd.) was used for pulverizing, mixing and dispersing 100 parts by mass of BMI-4000 and 100 parts by mass of polyalkenylphenol resin A at 25°C for 2 minutes, and then the curable resin mixture was removed out.

### Comparative Example 5

Both 100 parts by mass of BMI-4000 and 100 parts by mass of polyalkenylphenol resin A were added into a reactor and heated and stirred at 170°C for 15 minutes. Gelation proceeded in the reactor and the curable resin mixture could not be removed out.

### (2) Evaluation of curable resin compositions

The curable resin mixtures obtained by mixing as described above and the components listed in Table 1 were combined in the proportions listed in the table, and melt kneading was carried out (two rolls (8-inch roll diameter) by Toyo Seiki Co., Ltd., 110°C, 10 min). Each was then allowed to cool for 1 hour at room temperature (25°C) for solidification, after which a mill mixer (model WB-1 by Osaka Chemical Co., Ltd., 25°C, 30 sec) was used for pulverizing to obtain the target powdered curable resin composition. The curable resin composition was used to fabricate a sample for the flexural strength test, using a transfer molding machine (Matsuda Seisakusho, Co. Ltd.) under conditions with a die temperature of 180°C, a molding pressure of 100 kgf/cm² and a curing time of 180 seconds.

For measurement of the Shore D hardness, a transfer molding machine was used with a molding temperature of 180°C, and after a curing time of 2 minutes, the mold was opened and the Shore D hardness of the test strip was measured using a Shore D hardness meter.

The composition and preparation conditions for the curable resin mixture are shown in Table 2. The number average molecular weight change X of the curable resin mixture and the results of evaluating the properties of the curable resin composition are shown in Table 3.

**Table 1**

| Component | Content (pts by mass) |
|---|---|
| Filler | 80 |
| Curable resin mixture | 20 |
| Polymerization initiator | 0.13 |

**Table 2**

| | Component (A) | Component (B) | (A)/(B) (pts by mass/pts by mass) | Mixing conditions (temperature/time) | State of component (B) during addition of component (A) | Mixing method |
|---|---|---|---|---|---|---|
| Example 1 | Resin A | BMI-4000 | 100/100 | 150°C/10 min | Molten | Stirring |
| Example 2 | Resin A | BMI-4000 | 100/100 | 150°C/10 min | Molten | Twin roll |
| Example 3 | Resin A | BMI-1100H | 100/100 | 150°C/10 min | Molten | Stirring |
| Example 4 | Resin B | BMI-4000 | 100/100 | 150°C/10 min | Molten | Stirring |
| Example 5 | Resin A | BMI-4000 | 200/100 | 150°C/10 min | Molten | Stirring |
| Comp. Example 1 | Resin A | BMI-4000 | 100/100 | 180°C/30 min | Non-molten | Stirring |
| Comp. Example 2 | Resin A | BMI-4000 | 100/100 | 150°C/10 min | Non-molten | Stirring |
| Comp. Example 3 | Resin A | BMI-4000 | 100/100 | 100°C/10 min | Crystalline precipitated | Stirring |
| Comp. Example 4 | Resin A | BMI-4000 | 100/100 | 25°C/2 min | Powder | Mill mixer |
| Comp. Example 5 | Resin A | BMI-4000 | 100/100 | 170°C/15 min | Non-molten | Stirring |

**Table 3**

| | Number average molecular weight change X | Shore D hardness | Spiral flow (cm) | Flexural strength (MPa) | Tg (°C) |
|---|---|---|---|---|---|
| Example 1 | 0.1 | 95 | 102 | 110 | 180 |
| Example 2 | 0.0 | 90 | 98 | 100 | 170 |
| Example 3 | 0.1 | 92 | 87 | 110 | 180 |
| Example 4 | 0.2 | 85 | 128 | 104 | 160 |
| Example 5 | 0.2 | 80 | 110 | 98 | 150 |
| Comp. Example 1 | 2.1 | 85 | 30 | 90 | 143 |
| Comp. Example 2 | 0.0 | 73 | 88 | 78 | 115 |
| Comp. Example 3 | 0.1 | 70 | 100 | 80 | 120 |
| Comp. Example 4 | 0.0 | 50 | 97 | 75 | 110 |

Table 3 shows that Examples 1 to 5 had reduced gelation during kneading, and the cured products also had satisfactory physical property values. On the other hand, in Comparative Examples 1 and 5 in which polyalkenylphenol resin (A) and aromatic polymaleimide compound (B) were mixed in a non-molten state and heated at above the melting point of (B), the molecular weight increased and the viscosity was higher. Moreover, in Comparative Examples 2 to 4 in which aromatic polymaleimide compound (B) was mixed in an incompletely molten state with polyalkenylphenol resin (A), the Shore hardness, flexural strength and Tg were all low, which suggests that the curing reaction efficiency was insufficient.

### INDUSTRIAL APPLICABILITY

By using the method of the invention, it is possible to provide a curable resin composition with excellent workability, humidity resistance, heat resistance and mechanical strength, as well as electronic parts obtained by using the composition. Particularly, when used as a semiconductor sealing material in a power device, etc., the composition has excellent workability and fast-curing properties during molding, and after molding a cured product with high mechanical strength and high heat resistance may be obtained as a sealing material.

## Claims

1. A method for producing a curable resin mixture containing a polyalkenylphenol resin (A) that comprises a polyalkenylphenol compound having at least two phenol skeletons in the molecule and a 2-alkenyl group represented by formula (1) bonded to all or a portion of the aromatic rings constituting the phenol skeletons in the molecule, and an aromatic polymaleimide compound (B),
wherein the aromatic polymaleimide compound (B) is heated at or above its melting point to melt it, and the melted aromatic polymaleimide compound (B) and the polyalkenylphenol resin (A) are mixed in a temperature range in which the aromatic polymaleimide compound (B) does not recrystallize, 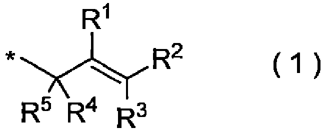 wherein in formula (1), R¹, R², R³, R⁴ and R⁵ each independently represent a hydrogen atom, an alkyl group of 1 to 5 carbon atoms, a cycloalkyl group of 5 to 10 carbon atoms or an aryl group of 6 to 12 carbon atoms, and the * symbol in formula (1) represents a portion bonding with a carbon atom constituting part of an aromatic ring.

2. The method according to claim 1, further comprising mixing the melted aromatic polymaleimide compound (B) with the polyalkenylphenol resin (A) that is in a molten state.

3. The method according to claim 1 or 2, further comprising adding the polyalkenylphenol resin (A) in a molten state to the melted aromatic polymaleimide compound (B), and mixing them.

4. The method according to any one of claims 1 to 3, wherein the polyalkenylphenol resin (A) comprises a polyalkenylphenol compound having structural units represented by formula (2)-1 and formula (2)-2, and when m is defined as the average number of structural units represented by formula (2)-1 per molecule and n is defined as the average number of structural units represented by formula (2)-2 per molecule, m is a real number of 1.1 to 35, m + n is a real number of 1.1 to 35, and n is a real number such that the value of the formula: m / (m + n) is 0.4 to 1, 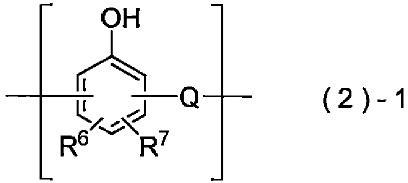 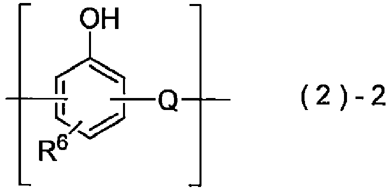 , wherein in formula (2)-1 and formula (2)-2, R⁶ each independently represents a hydrogen atom, an alkyl group of 1 to 5 carbon atoms or an alkoxy group of 1 to 5 carbon atoms, and R⁷ each independently represents a 2-alkenyl group represented by formula (1); R⁶ and R⁷ may be the same or different at each phenol skeletal unit; each Q independently represents an alkylene group represented by the formula -CR⁸R⁹-, a cycloalkylene group of 5 to 10 carbon atoms, a divalent organic group having an aromatic ring, a divalent organic group having an alicyclic fused ring, or a divalent organic group that is a combination of the foregoing; and R⁸ and R⁹ each independently represent a hydrogen atom, an alkyl group of 1 to 5 carbon atoms, an alkenyl group of 2 to 6 carbon atoms, a cycloalkyl group of 5 to 10 carbon atoms or an aryl group of 6 to 12 carbon atoms.

5. The method according to any one of claims 1 to 4, wherein the number average molecular weight of the polyalkenylphenol resin (A) is 300 to 5000.

6. The method according to any one of claims 1 to 5, wherein the aromatic polymaleimide compound (B) is a bismaleimide compound.

7. The method according to any one of claims 1 to 6, comprising mixing 40 to 150 parts by mass of the polyalkenylphenol resin (A) with respect to 100 parts by mass of the aromatic polymaleimide compound (B).

8. The method according to any one of claims 1 to 7, comprising mixing the melted aromatic polymaleimide compound (B) and the polyalkenylphenol resin (A) so that the number average molecular weight change X, represented by the formula: X = (Mn' / Mn) - 1, where Mn is the number average molecular weight of the mixture obtained by mixing the polyalkenylphenol resin (A) and the aromatic polymaleimide compound (B) without heating, and Mn' is the number average molecular weight of the curable resin mixture, is in the range of 0 to 2.0.

9. A curable resin mixture obtained by the method according to any one of claims 1 to 8.

10. A method for producing a curable resin composition, comprising further mixing an additive (C) when the polyalkenylphenol resin (A) and the aromatic polymaleimide compound (B) are mixed in the method according to any one of claims 1 to 8.

11. A method for producing a curable resin composition, comprising mixing an additive (C) with a curable resin mixture produced by the method according to any one of claims 1 to 8.

12. The method according to claim 10 or 11, wherein the additive (C) comprises a filler.

13. The method according to claim 10 or 11, wherein the additive (C) comprises a curing accelerator.

14. A curable resin composition obtained by the method according to any one of claims 10 to 13.

15. A cured product of the curable resin mixture according to claim 9 or the curable resin composition according to claim 14.
